# EUROPÄISCHE PATENTSCHRIFT

(11) **EP 2 729 402 B1**
(45) Veröffentlichungstag und Bekanntmachung des Hinweises auf die Patenterteilung: **16.03.2016**
(21) Anmeldenummer: 12723866.5
(22) Anmeldetag: 24.05.2012
(51) Int. Cl.: B67C 3/00, B07C 5/34, G01M 3/36

(54) **VERFAHREN ZUM BESTIMMEN DER UNVERSEHRTHEIT UND DICHTIGKEIT VON BEHÄLTERN BEI ABFÜLLANLAGEN**
METHOD FOR DETERMINING THE INTACTNESS AND LEAKTIGHTNESS OF CONTAINERS IN FILLING PLANTS
PROCÉDÉ POUR DÉTERMINER L'INTÉGRITÉ ET DE L'ÉTANCHÉITÉ DE CONTENANTS DANS DES INSTALLATIONS DE REMPLISSAGE

(30) Priorität: 06.07.2011 DE 102011106832
(43) Veröffentlichungstag der Anmeldung: 14.05.2014
(73) Patentinhaber: Krones AG, 93073 Neutraubling (DE)
(72) Erfinder: LINDNER, Peter, 84085 Langquaid (DE); FIEGLER, Rudolf, 93053 Regensburg (DE); GUT, Thorsten, 93073 Neutraubling (DE); PRÖLL, Sophie, 93102 Pfatter (DE); LEYKAMM, Dieter, 93073 Neutraubling (DE)
(74) Vertreter: Grünecker Patent- und Rechtsanwälte PartG mbB
(86) Internationale Anmeldenummer: PCT/EP2012/059727
(87) Internationale Veröffentlichungsnummer: WO 2013/004432

(56) Entgegenhaltungen:
- EP-A2- 0 894 544
- WO-A2-2005/124308
- DE-A1- 4 332 461
- JP-A- 59 120 934
- US-A- 3 012 665
- US-A- 3 866 753

## Beschreibung

Die Erfindung betrifft ein Verfahren zum Bestimmen der Unversehrtheit und Dichtigkeit von Behältern mit den Merkmalen des Oberbegriffs von Anspruch 1.

Ein derartiges Verfahren ist beispielsweise aus der US 3,866,753 bekannt. Dabei wird eine Zentrierglocke zur Höhenkontrolle auf leere Behälter aufgesetzt und die Dichtflächen durch die Beaufschlagung mit einem Luftdruck geprüft. Nachteilig dabei ist, dass das Verfahren nur für die Prüfung von leeren Behältern geeignet ist.

Aus der US 3,012,665 ist ein Vorrichtung zur Höhenkontrolle von Behältern bekannt, bei dem die Behälter auf Tellern stehend gegen bewegliche Zentrierglocken gefahren werden, deren Position dann mechanisch erfasst wird. Allerdings wird lediglich die Behälterhöhe erfasst und eine Dichtigkeitsprüfung ist nicht vorgesehen.

Die WO 2005/124308 A2 offenbart ein Verfahren zur Detektion eines Lecks in flexiblen Behältern, bei dem Kraftverläufe bei der Einspannung der flexiblen Behälterwände ausgewertet werden. Das Verfahren ist allerdings aufwändig, da eine zusätzliche Behältereinspannung notwendig ist.

Aus dem Stand der Technik, etwa der DE 10 2009 025907 A1 sind Vorrichtungen und Verfahren gemäß dem Oberbegriff des Anspruchs 1 zur Behandlung von Behältern bekannt. So offenbart die DE 10 2009 025907 A1 eine Behälterbehandlungsvorrichtung mit mindestens einer in vertikaler Richtung verstellbaren Halteeinrichtung zum Halten, Greifen und/oder Drehen von auf einer Auflage stehenden Behältern an deren oberen Mündungen und/oder an den Halsbereichen, wobei die Vorrichtung einen doppelt wirkenden Linearantrieb sowie wenigstens einen Kraft- und/oder Wegsensor zur Erfassung einer Stell- und/oder Haltekraft des Linearantriebs und/oder einer aktuellen Lage der Halteeinrichtung umfasst. Unter einem doppelt wirkenden Linearantrieb wird in dieser Druckschrift ein doppelt wirkender Pneumatikzylinder oder Hydraulikzylinder verstanden, der mit einem auch als Halteglocke bezeichneten Zentrierkopf zusammenarbeitet, derart, dass er in vertikaler Richtung verstellbar ist, beispielsweise über einen drehbaren Stellantrieb. In der DE 10 2009 025907 A1 sind keinerlei Kurven- oder Nockenführungen für eine mechanische Zwangssteuerung einer Halteeinrichtung für die Behälter, beispielsweise für Flaschen, nötig.

Solche Vorrichtungen und Verfahren werden meistens bei Abfüllanlagen angewendet, wobei solche Abfüllanlagen auch Teilaggregate umfassen, wie Etikettierer, Befüller, Überprüfungseinrichtungen und Verschlusseinrichtungen.

Unterschiedliche Arten von Zentrierköpfen oder Halteglocken sind bekannt, beispielsweise aus der DE 10 2009 005181 A1, in der ebenfalls eine Behälterbehandlungsmaschine offenbart ist, die einen Greifer detailliert. Diese Behälterbehandlungsmaschine wird zum Behandeln von Behältern eingesetzt, insbesondere ist eine Etikettiermaschine mit einem um eine vertikale Maschinenachse umlaufend antreibbaren Rotor und mit mehreren am Rotor gebildeten Behandlungspositionen, die jeweils wenigstens einen Behälterträger sowie eine Einspann- und/oder Zentriereinheit aufweisen, welche in einer gesteuerten Hubbewegung zwischen einer Ausgangsstellung und einer den jeweiligen Behälter zentrierenden und/oder einspannenden Position gesteuert bewegbar sind. Der eine Flasche greifende Greiferkopf 7 ist dabei in einer Schnappausführung ausgestaltet, wobei zwei Teile um eine Vertikalachse relativ zueinander drehbar sind, derart, dass der Greiferkopf in den Verschluss am Hals einer Flasche greift.

Die DE 2422526 offenbart ein Verfahren und eine Vorrichtung zum Überprüfen der Dichtheit von gefüllten und verschlossenen Behältern, wobei insbesondere Flaschen überprüft werden. Über ein definiertes Drücken der Flasche, mit nachfolgender Füllstandsmessung und einer Eindrückwegmessung, wird eine Aussage über die Dichtigkeit und die Integrität der Flasche getroffen.

Einen anderen Weg offenbart die DE 4136472 C2, die ein Verfahren zum Feststellen der Dichtigkeit von Behältnissen wie Flaschen, Dosen, Fässern, oder dergleichen betrifft, wobei diese Behältnisse mit durch ein Gas versetzte Getränke, z. B. mit Säften, Cola, Bier, Limonaden oder dergleichen gefüllt sind und mit einem geeigneten Verschluss abgedichtet bzw. verschlossen sind. Über ein Wasserbad wird die Flüssigkeit der Behältnisse in Schwingung versetzt, etwa im Sinne eines Schüttelns. Auf diese Weise wird ein Kohlensäureaustritt aus der Flüssigkeit erzwungen. Ist der Verschluss undicht, führt dies zu einem Austreten von Gas und eines Teils des Getränks aus dem Behältnis, z. B. aus einer Flasche, so dass die anschließend durch einen Förderer weitertransportierten Behältnisse bei Passieren einer Erkennungsstation als nicht mehr vollständig befüllt erkannt werden. Eine solche Erkennungsstation kann einen Gammakopf enthalten.

Die DE 10 2005 009 918 B4 drückt mittels eines federgelagerten Tastfingers in ein befülltes oder befüllbares Gefäß ein, um den Versatz des Tastfingers zu Bestimmen und dadurch Rückschlüsse auf die Dichtigkeit treffen zu können.

Einen gänzlich anderen Weg offenbart die EP 0 821 230 B1, die eine Ultraschallmessung an einem Gas unter Druck enthaltendem Getränk nutzt, um die Dichtigkeit eines Verschlusses dies Behälters zu prüfen.

Es ist die Aufgabe der vorliegenden Erfindung, besonders kostengünstig und effizient einerseits die Unversehrtheit und andererseits die Dichtigkeit von Behältern zu überprüfen.

Zur Lösung dieser Aufgabe stellt die Erfindung ein Verfahren zum Bestimmen der Unversehrtheit und Dichtigkeit von Behältern mit den Merkmalen von Anspruch 1 bereit.

Auf diese Weise können Verschlussfehler oder sogar ein Bruch von Flaschen, insbesondere bei der Verwendung von Glasflaschen, festgestellt werden, wenn die Behältnisse in dieser Form in der Abfüllanlage genutzt werden. Auch bei PET-Flaschen kann man durch Erfassen des Aufsetzdruckes feststellen, ob sie deutlich unterfüllt sind und daher bei Belastung einknicken.

Wenn die Zentrierglocke auf den Behälter fährt, nimmt sie eine gewisse Position ein. Ist die Flasche beschädigt, beispielsweise bei Bruch einer Glasflasche, fährt der Zentrierkopf nach unten, also auf der Längsachse des Behälters weiter weg von einem Ursprungspunkt, wodurch eine mangelnde Unversehrtheit ermittelt werden kann. Selbst bei anderem Material als Glas, kann bei Behältern in Form von Flaschen die Integrität und Dichtigkeit verifiziert werden. Wenn die Flasche nicht luftdicht verschlossen ist, sei es durch einen Verschlussfehler oder ein Loch in der Flasche, oder andererseits deutlich unterfüllt ist, ändert sich die Position des Zentrierkopfes auf der Längsachse, da bei gleichbleibender Kraft in einem mit dem Zentrierkopf verbundenen Karussell stetig die Position nachgefahren werden muss, da die Flasche "einknickt". Dies kann insbesondere an den Kurven deutlich erkannt werden.

Dadurch dass der Zentrierkopf über einen positionsgeregelten Linearantrieb gefahren wird, so wird mit einfachen Mitteln auch ein Kraftmesselement integriert.

Vorteilhafte Ausführungsformen sind in den Unteransprüchen beansprucht und werden nachfolgend näher erläutert.

So ist es von Vorteil, wenn der Zentrierkopf mit einer definierten Kraft auf den Behälter aufgesetzt wird, so dass sich in einer in dem Behälter enthaltenen Flüssigkeit ein Gas, wie z. B. CO₂ löst und den Innendruck des Behälters erhöht, oder der Behälter zum Erreichen einer Resonanz in der in ihm enthaltenen Flüssigkeit schüttelnd fortbewegt wird. Mittels definierter Kraft kann ein hartes Aufsetzen, optional unter Zuhilfenahme einer Ausholbewegung, der Zentrierkopf, welcher auch als Zentrierglocke bezeichnet werden kann, auf einen oberen Flaschenrand des Behälters aufgesetzt werden, um CO₂ freizusetzen. Man beobachtet dann, ob dieses CO₂ entweicht. Ein solch gezielt hartes Aufsetzen von Zentrierköpfen oder Zentrierglocken in Behälterbehandlungsmaschinen ist beispielsweise auch im Rahmen einer Etikettiermaschine realisierbar. Nach dem Aufsetzen mit einem Schlag, löst sich CO₂ aus der in dem Behälter enthaltenen Flüssigkeit und erhöht den Druck darin, was dem elektrischen Antrieb entgegenwirkt. Das auftretende Moment kann über eine bestimmte Zeit und/oder einen bestimmten Weg verfolgt werden. Findet der Druckaufbau nicht oder nur ungenügend statt, ist der Behälter als undicht zu bewerten. Selbstverständlich ist mit dem Antrieb ein vollständiger Druckverlauf nachvollziehbar. Mit einem bestimmten Druckverlauf ist dabei gemeint, dass nach Anregen des Behälters, sofern dies überhaupt notwendig ist, ein langsam steigender Druck zu beobachten ist. Ist die Undichtigkeit im Behälter relativ klein, so wird nach dem Druckaufbau ein Fall desselben verzeichnet. dieser Druckverlauf lässt sich mit herkömmlichen Auswertemethoden relativ einfach auswerten. Als auswertbare Parameter sind die Geschwindigkeit des Druckaufbaus, der maximal erreichbare Druck nach einer bestimmten Zeit, die Haltekraft, der Druckabfall sowie eine Steigung im Grad des Druckverlaufes zu nennen.

Als Anregung zumindest zum Druckaufbau in CO₂-haltigen Getränken, kann das eingangs erwähnte gezielte harte Aufsetzen von Zentrierköpfen dienen, wobei alternativ ein gezieltes "Aufschütteln" durch einen Behältertellerantrieb, beispielsweise einen Flaschentellerantrieb, ermöglicht werden kann, wobei eine Resonanz ein ähnliches Verhalten provoziert. Außer einer speziell darauf abgestellten Steuerungstechnik sind keine weiteren Maßnahmen mehr notwendig, was zu einer Vereinfachung von Abfüllanlagen führt. Alternativ ist es auch möglich, eine Krafteinwirkung mittels anderer Mittel direkt, beispielsweise über ein Kontaktelement oder indirekt, beispielsweise über Pressluft, einen Druckaufbau im Inneren des Behälters herbeizuführen.

Ein weiteres vorteilhaftes Ausführungsbeispiel ist dadurch gekennzeichnet, dass während des Transport des Behälters mehrfach die relative Position des Zentrierkopfes auf der Längsachse bestimmt wird. Auf diese Weise wird über einen bestimmten Weg oder eine bestimmte Zeit die relative Lage des Zentrierkopfes auf der Längsachse bestimmt und kann für die Unversehrtheits- und Dichtigkeitsprüfung herangezogen werden. Diesbezüglich ist die Zuhilfenahme eines Prozessors von Vorteil, der die entsprechenden Signale weiterverarbeitet.

Auch ist es von Vorteil, wenn die relative Position kontinuierlich erfasst wird, da dann zu jedem Zeitpunkt und an jedem Wegpunkt die notwendige Information zur Verfügung steht. Ferner ist es von Vorteil, wenn die relative Position des Zentrierkopfes auf der Längsachse in Abhängigkeit einer Fixebene zur Bestimmung der Absoluthöhe des Zentrierkopfes über der Fixebene genutzt wird. Auf diese Weise können zusätzliche auf den Behälter, wie eine Flasche wirkende Einflüsse berücksichtigt werden.

Ein weiteres Ausführungsbeispiel ist dadurch gekennzeichnet, dass über die relative Position oder die Absoluthöhe Rückschlüsse auf den Druckaufbau in dem Behälter, den maximal erreichbaren Druck in dem Behälter, der Haltekraft der Zentrierglocke, den Druckabfall in dem Behälter und/oder den Gradienten der Druckveränderung in dem Behälter gezogen werden.

Bewährt haben sich auch besondere andere Arten von Kraft- bzw. Wegabnehmern und deren Kombinationen, wie z. B. Zahnstangenantriebe, angetrieben durch einen Elektromotor oder federvorgespannte Zentrierköpfe mit Wegaufnehmern.

Wenn zusätzlich oder alternativ zur Bestimmung der relativen Position des Zentrierkopfes eine Messinformation eines im Zentrierkopf enthaltenen und mit dem Behälter in Wirkkontakt befindlichen Sensors genutzt wird, so kann eine andere und/oder präzisere Messung erreicht werden. So kann beispielsweise auf eine Druckmessung zurückgegriffen werden, wenn der Sensor als ein Drucksensor, etwa nach Art eines Piezo-Drucksensors ausgestaltet ist. Eine solche Druckprüfung kann innerhalb einer Behandlungsmaschine mit einer Einspannvorrichtung über eine Druckmessdose durchgeführt werden. Um mechanische Beschädigungen zu verhindern, wird der Zentrierkopf dabei so ausgeführt, dass dieser am Außenrand eines Behälterverschlusses luftdicht abschließt. Der Zentrierkopf ist dabei als Hohlraum ausgeführt, wobei sich in diesem Hohlraum sich die Druckmessdose befindet, die den Druckverlauf bei dem Anregen des Behälters aufzeichnet. Diese auch als Aufnehmerdose bezeichnete Druckmessdose kann sich örtlich auch anderer Stelle befinden, beispielsweise muss der Luftraum des Zentrierelementes dann lediglich über einen Luftschlauch verlängert werden. Es ist im Prinzip auch eine Füllstandschalterausbildung, wie er in Hebewerken, Waschmaschinen oder Geschirrspülern Anwendung findet, möglich. Gerade die Piezo-Drucksensoren weisen Vorteile aufgrund ihrer Kraftschlüssigkeit auf. Diese sollten jedoch aufgrund mechanischer Einwirkungen mittels einer Druckfeder entkoppelt werden, wobei dann der angesprochene Luftraum entfallen kann.

Auch ist es von Vorteil, wenn der Sensor als Kraft- und/oder Wegaufnehmer ausgestaltet ist. Ein solcher Wegaufnehmer ist vorteilhafterweise als Kraftelement ausgebildet und muss nicht zwingend in den Zentrierkopf integriert sein. Ein Kraftaufnehmer wie eine Wägezelle kann sich ebenso im Transportmittel, wie dem Flaschenteller, befinden. Bei einer konstanten Zentrierkopfvorspannung ist die Ausdehnung des Behälters nach unten ebenso feststellbar, wobei nun über diesen Umweg die Unversehrtheit bzw. Dichtigkeit bestimmt werden kann.

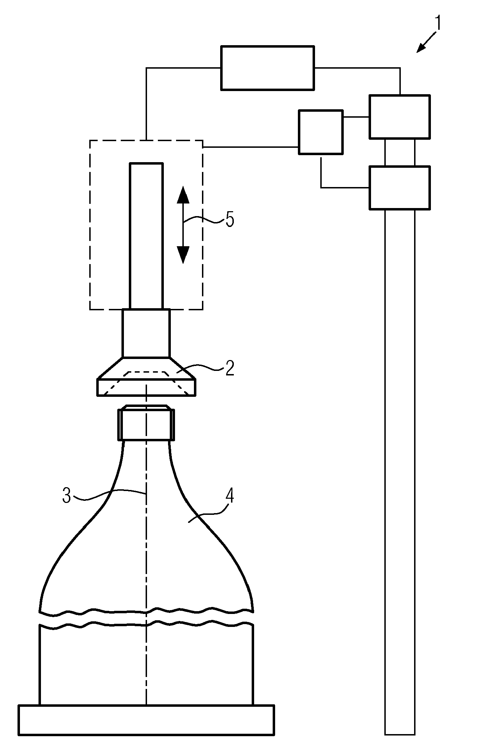

In Fig. 1 ist eine Vorrichtung dargestellt, mit der das erfindungsgemäße Verfahren durchführbar ist. Es zeigt:
- Fig. 1: eine schematische Darstellung einer diesbezüglich genutzten Behälterbehandlungsvorrichtung.

Die Behälterbehandlungsvorrichtung 1 ist Teil einer Abfüllanlage und weist einen Zentrierkopf 2 auf, der entlang einer Längsachse 3 eines Behälters 4 verfahrbar ist. Die Verschieberichtung ist mit dem Pfeil 5 visualisiert.

Die Längsachse 3 ist eine Rotationssymmetrieachse des Behälters 4. Der Behälter 4 ist als Flasche ausgebildet, insbesondere als Glasflasche oder PET-Flasche. Der Zentrierkopf 2 ist über eine nicht dargestellte Linearantriebseinheit in seiner Relativposition entlang der Längsachse 3 des Behälters 4 verfahrbar.

Ein großes Problem bei den derzeitigen Abfüllanlagen ist die Füllhöhenbestimmung, oder genauer Inhaltsbestimmung bei Behältern 4 aus Kunststoff. Aufgrund unterschiedlicher Druckverhältnisse bei der Abfüllung von stillen Produkten, CO₂-haltigen oder stickstoffhaltigen Produkten in entsprechende Behälter 4, sind die Dimensionen solcher Behälter 4 nicht immer gleich. Damit ist die Füllhöhenbestimmung über konventionelle Füllhöhenerkennungen nicht unbedingt zielführend, da der Füllpegel im Behälter schwankt. Eine Gewichtsbestimmung des Behälters mit einem Verschluss, insbesondere nach Subtraktion des Gewichts des Verschlusses, des Preformgewichtes und eines eventuell Etiketts ermöglicht aber, den Inhalt festzustellen. Bisher scheiterten solche Überlegungen immer daran, da das Behälterhandling bei einbahnigen Vorrichtungen und extrem kurzen Integrationszeiten für eine genutzte Messdose, ungefähr 60 Millisekunden pro Behälter, dies nicht zuließen. Dies wird noch verschärft dadurch, dass eine gewisse Messzeit verstreichen muss, in der eine Behälterberuhigung stattfinden kann, was den Messzeitraum etwa halbiert.

Mit dem erfindungsgemäßen Verfahren kann die Druckkraft der Zentrierglocke bestimmt werden, so dass über eine Wägezelle im Flaschenteller das Behältergesamtgewicht bestimmt werden kann. Nach Subtraktion von Haltekraft und Ausstattung steht das Produktgewicht fest. Zeitlich ist eine Entspannung festzustellen, da durch die Vielzahl der Kraftaufnehmer, nämlich in jedem Flaschenteller eine "virtuelle" Taktmaschine geschaffen wird.

Im Behälterstrom befinden sich meist auch unterschiedliche Behälterhöhen, die im Einlauf einer behandelnden Maschine mit einem entsprechenden Inspektionsmodul erkannt werden, so dass die Zentrierköpfe je nach gerade einlaufender Behälterhöhe passend eingespannt werden können. Damit kann man auch unterschiedliche Behälterhöhen, insbesondere unterschiedliche Flaschen in puncto ihrer Höhe, mit unterschiedlichen Etiketten ausgestattet werden, und diese getrennt zu Packmaschine verfahren werden.

Auch eine Sortieraufgabe kann dadurch gelöst werden. Befinden sich im Behälterstrom unterschiedliche Flaschenfarben, so kann dies im Inspektionsmodul erkannt werden und die diesbezügliche Information einem Behandlungsmodus zugeführt werden, damit eine sortenreine Weiterverfahrung ermöglicht ist.

## Patentansprüche

1. Verfahren zum Bestimmen der Unversehrtheit und Dichtigkeit von Behältern (4), die in einer Abfüllanlage bearbeitet werden, wobei die Abfüllanlage zumindest einen Zentrierkopf (2) zum Halten, Greifen und/oder Drehen eines der Behälter (4) beinhaltet, wobei der Zentrierkopf (2) entlang einer Längsachse (3) des Behälters (4) verfahrbar angeordnet ist, wobei der Zentrierkopf (2) über einen positionsgeregelten Linearantrieb verfahren wird, **dadurch gekennzeichnet, dass** die relative Position des Zentrierkopfes (2) auf der Längsachse (3) bestimmt und für die Unversehrtheits- und Dichtigkeitsbestimmung genutzt wird.

2. Verfahren nach Anspruch 1, **dadurch gekennzeichnet, dass** der Zentrierkopf (2) mit einer definierten Kraft auf den Behälter (4) aufgesetzt wird, so dass sich in einer in dem Behälter (4) enthaltene Flüssigkeit ein Gas, wie CO₂ löst und den Innendruck des Behälters (4) erhöht, oder der Behälter (4) zum Erreichen einer Resonanz in der Flüssigkeit schüttelnd fortbewegt wird.

3. Verfahren nach Anspruch 1 oder 2, **dadurch gekennzeichnet, dass** während des Transports des Behälters (4) mehrfach die relative Position des Zentrierkopfes (2) auf der Längsachse (3) bestimmt wird.

4. Verfahren nach Anspruch 3, **dadurch gekennzeichnet, dass** die relative Position des Zentrierkopfes (2) auf der Längsachse (3) des Behälters (4) erfasst wird.

5. Verfahren nach einem der Ansprüche 1 bis 4, **dadurch gekennzeichnet, dass** die relative Position des Zentrierkopfes (2) auf der Längsachse (3) in Abhängigkeit einer Fixebene zur Bestimmung der Absoluthöhe des Zentrierkopfes (2) über der Fixebene genutzt wird..

6. Verfahren nach einem der Ansprüche 1 bis 5, **dadurch gekennzeichnet, dass** über die relative Position oder die Absoluthöhe Rückschlüsse auf den Druckaufbau in dem Behälter (4), den maximal erreichbaren Druck in dem Behälter (4), der Haltekraft des Zentrierkopfes (2), den Druckabfall in dem Behälter (4) und/oder den Gradienten der Druckveränderung in dem Behälter (4) gezogen werden.

7. Verfahren nach einem der Ansprüche 1 bis 6, **dadurch gekennzeichnet, dass** zusätzlich eine Messinformation eines in dem Zentrierkopf (2) enthaltenen und mit einem Behälter (4) in Wirkkontakt befindlichen Sensors genutzt wird.

8. Verfahren nach Anspruch 7, **dadurch gekennzeichnet, dass** der Sensor als ein Drucksensor, etwa nach Art eines Piezo-Drucksensors ausgestaltet ist.

9. Verfahren nach Anspruch 7, **dadurch gekennzeichnet, dass** der Sensor als Kraft- und/oder Wegaufnehmer ausgestaltet ist.

## Claims

1. Method for determining the integrity and leak tightness of containers (4) that are processed in a filling line, where said filling line comprises at least one centering head (2) for holding, gripping and/or turning one of said containers (4), where said centering head (2) is arranged movably along a longitudinal axis (3) of said container (4), wherein said centering head (2) is moved by a position-controlled linear actuator,
**characterized in that**
the relative position of said centering head (2) is determined on said longitudinal axis (3) and used for determining the integrity and leak tightness.

2. Method according to claim 1, **characterized in that** said centering head bears upon said container (4) at a defined force, so that a gas, e.g. CO₂, contained in a liquid within said container is released and increases the internal pressure of said container (4), or said container (4) is further conveyed in a shaking manner in order to achieve a resonance in said liquid.

3. Method according to claim 1 or 2, **characterized in that** the relative position of said centering head (2) on said longitudinal axis (3) is repeatedly determined during transport of said container (4).

4. Method according to claim 3, **characterized in that** said relative position of said centering head (2) on said longitudinal axis (3) is recorded.

5. Method according to one of the claims 1 to 4, **characterized in that** said relative position of said centering head (2) on said longitudinal axis (3) is used in dependency of a fixed plane for determining the absolute height of said centering head (2) above said fixed plane.

6. Method according to one of the claims 1 to 5, **characterized in that** conclusions are drawn from said relative position or said absolute height about the pressure increase in said container (4), the maximum possible reachable pressure in said container (4), the holding force of said centering head (2), the pressure drop in said container (4) and/or the gradient of the pressure change in said container (4).

7. Method according to one of the claims 1 to 6, **characterized in that** in addition a measurement information of a sensor contained in said centering head (2) and being in operative contact with said container (4) is used.

8. Method according to claim 7, **characterized in that** said sensor is designed as a pressure sensor, such as in the kind of a piezo-electric pressure sensor.

9. Method according to claim 7, **characterized in that** said sensor is designed as a force and/or displacement sensor.

## Revendications

1. Procédé pour déterminer l'intégrité et l'étanchéité de récipients ou contenants (4), qui sont traités dans une installation de remplissage, l'installation de remplissage renfermant au moins une tête de centrage (2) pour maintenir, saisir et/ou faire tourner l'un des contenants (4), la tête de centrage (2) étant agencée de manière à pouvoir être déplacée le long d'un axe longitudinal (3) du contenant (4), et la tête de centrage (2) étant déplacée par l'intermédiaire d'un entraînement linéaire régulé en position,
**caractérisé en ce que** l'on détermine la position relative de la tête de centrage (2) sur l'axe longitudinal (3) et on l'utilise pour la détermination de l'intégrité et de l'étanchéité.

2. Procédé selon la revendication 1, **caractérisé en ce que** la tête de centrage (2) est appliquée avec une force définie sur le contenant (4) de sorte qu'un gaz, tel du CO₂, se dissout dans un liquide contenu dans le contenant (4) et augmente la pression intérieure du contenant (4), ou le contenant (4) est continuellement déplacé en étant secoué pour atteindre une résonance dans le liquide.

3. Procédé selon la revendication 1 ou la revendication 2, **caractérisé en ce que** pendant le transport du contenant (4), on détermine plusieurs fois la position relative de la tête de centrage (2) sur l'axe longitudinal (3).

4. Procédé selon la revendication 3, **caractérisé en ce que** l'on relève la position relative de la tête de centrage (2) sur l'axe longitudinal (3) du contenant (4).

5. Procédé selon l'une des revendications 1 à 4, **caractérisé en ce que** l'on utilise la position relative de la tête de centrage (2) sur l'axe longitudinal (3) en fonction d'un plan fixe pour déterminer la hauteur absolue de la tête de centrage (2) au-dessus du plan fixe.

6. Procédé selon l'une des revendications 1 à 5, **caractérisé en ce que** par l'intermédiaire de la position relative ou de la hauteur absolue, on tire des conclusions quant à l'établissement de la pression dans le contenant (4), à la pression maximale pouvant être atteinte dans le contenant (4), à la force de maintien de la tête de centrage (2), à la chute de pression dans le contenant (4) et/ou au gradient de la variation de pression dans le contenant (4).

7. Procédé selon l'une des revendications 1 à 6, **caractérisé en ce que** l'on utilise en supplément une information de mesure d'un capteur contenu dans la tête de centrage (2) et se trouvant en contact d'interaction avec le contenant (4).

8. Procédé selon la revendication 7, **caractérisé en ce que** le capteur est réalisé sous la forme d'un capteur de pression, sensiblement à la manière d'un capteur de pression piézoélectrique.

9. Procédé selon la revendication 7, **caractérisé en ce que** le capteur est réalisé en tant que capteur de force et/ou capteur de déplacement.
